Europäisches Patentamt

European Patent Office

Office européen des brevets

(11) Numéro de publication: **0 309 320**
**A1**

## (12) DEMANDE DE BREVET EUROPEEN

(21) Numéro de dépôt: **88402328.4**

(22) Date de dépôt: **15.09.88**

(51) Int. Cl.⁴: **G 01 T 1/16**

(30) Priorité: **18.09.87 FR 8712970**

(43) Date de publication de la demande:
**29.03.89 Bulletin 89/13**

(84) Etats contractants désignés: **BE DE GB IT**

(71) Demandeur: **COMMISSARIAT A L'ENERGIE ATOMIQUE**
**31/33, rue de la Fédération**
**F-75015 Paris (FR)**

(72) Inventeur: **Rambaut, Michel**
**57H, rue de la Hacquinière**
**F-91440 Bures sur Yvette (FR)**

(74) Mandataire: **Mongrédien, André et al**
**c/o BREVATOME 25, rue de Ponthieu**
**F-75008 Paris (FR)**

(54) **Système de suppression du bruit et de ses variations pour la détection d'un signal pur dans un signal discret bruité mesuré.**

(57) Le système détecte des événements apparaissant dans une fenêtre énergétique prédéterminée. Il effectue un comptage $N_2$ pendant une durée $\Delta T_s$, et un comptage $N_3$ pendant une durée $\Delta T_b$, où $\Delta T_b = q$. $\Delta T_s$ et q est un nombre positif, pendant laquelle aucun événement correspondant au signal pur n'est présent. Il évalue l'information apportée par les comptages $N_2$, $N_3$ pour la valeur choisie du coefficient q, ou la probabilité de fausse détection associé, par comparaison à au moins un seuil d'information $I_m$, chaque seuil étant associé à un taux de fausse détection prédéterminé. La comparaison peut être réalisée indirectement sur une fonction de cette probabilité et peut utiliser de valeurs tabulées.

Application notamment à la détection des rayonnements corpusculaires.

FIG. 1

EP 0 309 320 A1

**Description**

## SYSTEME DE SUPPRESSION DU BRUIT ET DE SES VARIATIONS POUR LA DETECTION D'UN SIGNAL PUR DANS UN SIGNAL DISCRET BRUITE MESURE

La présente invention a pour objet un système de suppression du bruit et de ses variations pour la détection d'un signal pur dans un signal discret bruité mesuré. Ce système évalue l'information apportée par le signal mesuré. Cette information se traduit par une probabilité de fausse détection, c'est-à-dire une probabilité de détecter un signal pur là où il n'y en a pas. L'information peut être comparée à seuil si l'on désire uniquement détecter la présence ou l'absence d'un signal pur, ce seuil correspondant à un taux de fausse détection prédéterminé ; l'information peut aussi être évaluée si on désire connaître le degré de certitude de l'existence d'un signal pur.

L'invention concerne la détection des signaux discrets, c'est-à-dire les signaux produits par des événements discontinus. L'invention s'applique notamment à la détection des rayonnements corpusculaires, tels que les rayons neutroniques ou les rayons gamma.

La détection d'un signal pur dans un signal bruité mesuré suppose que l'on peut supprimer le bruit dans ledit signal mesuré. Deux cas se présentent : le taux moyen de bruit est constant et le taux moyen de bruit est fluctuant. L'invention concerne un système de détection lorsque le taux moyen de bruit est fluctuant. Un taux moyen de bruit constant n'étant qu'un cas particulier d'un taux moyen de bruit fluctuant, le système de l'invention peut a fortiori être utilisé pour la détection lorsque le taux moyen de bruit est constant.

La détection d'un rayonnement corpusculaire particulier, par exemple nucléaire, se fait en présence d'un bruit corpusculaire ayant plusieurs causes. Dan le cas d'un rayonnement nucléaire, une partie du bruit est due au rayonnement cosmique et l'autre partie est due à la radioactivité naturelle des terrains et des roches. Il existe aussi un bruit dû au détecteur utilisé. Le rayonnement cosmique peut varier au cours du temps et le bruit corpusculaire dû aux roches et au terrain est essentiellement variable, selon le lieu où se fait la mesure. Un rayonnement particulier ne peut donc être détecté que si l'on connaît le bruit, ou bien si on en a une estimation suffisante.

Le stockage des informations est effectué pendant une durée de temps limitée $\Delta T$. Ce stockage des informations se fait de façon discrète : lorsqu'une particule est détectée, le contenu d'une mémoire est augmenté d'une unité. En général, un ou plusieurs paramètres définissent l'événement nucléaire détecté. Dans le cas où cet événement ne dépend que d'un paramètre unique, celui-ci peut être par exemple l'énergie ; c'est le cas typique de la détection d'un rayonnement gamma à l'aide d'un germanium intrinsèque ou d'un scintillateur NaI associé à un photomultiplicateur. Ce paramètre unique peut aussi être le temps, par exemple lorsqu'on mesure le temps de vol d'une particule. La condition de détection peut être également une fonction logique complexe dépendant de l'état de plusieurs détecteurs durant un intervalle de temps très court, en général de l'ordre de quelques dizaines de nanosecondes, notamment dans le case de la détection de particules dans une chambre à fils.

La difficulté de la détection d'un signal discret bruité réside dans le fait que le bruit de fond a un niveau essentiellement variable, en fonction du temps et en fonction du lien où se fait la détection.

Le demandeur a décrit dans le document FR-A-2579767 un système pour la détection d'un signal pur dans un signal discret bruité mesuré.

Dans ce système, on utilise une première fenêtre énergétique, appelée voie de signal, correspondant à l'énergie des événements à détecter (rayonnement corpusculaire particulier ou autre) et une seconde fenêtre énergétique, appelée voie de référence pour évaluer le bruit de fond.

Pendant des durée $\Delta T$ égales, on compte le nombre $N_2$ d'événements détectés dans la voie de signal et le nombre $N_3$ d'événements détectés dans la voie de référence. Les $N_2$ événements détectés dans la voie de signal comprennent $N_1$ événements dus au rayonnement corpusculaire à détecter et des événément dus au bruit de fond.

Le critère de détection d'un signal pur dans la voie de signal, c'est-à-dire $N_1 > 0$, est défini par l'inégalité $N_2 > N_3/\lambda$, où $\lambda$ est le rapport des taux moyens de bruit $M_3$ et $M_2$ respectivement dans la voie de référence et dans la voie de signal.

Lorsque le critère de détection est satisfait, il existe une information I sur l'existence d'un signal pur dans le signal mesuré, et cette information est d'autant plus importante que la différence $N_2-N_3/\lambda$ est élevée.

Cette information I peut être quantifiée, notamment selon l'expression $I = -\log(PF/(1-PF))$ dans laquelle PF est la probabilité de fausse détection, c'est-à-dire la probabilité de détecter un événement du au bruit et que l'on attribue au rayonnement corpusculaire particulier.

Le demandeur a constaté que le système décrit dans le document FR-A-2579767 ne pouvait pas être utilisé efficacement dans certaines situations. En particulier la détection est faussée si une source de rayonnement se superpose au bruit dans la voie de référence, car le bruit de fond est alors évalué de manière incorrecte.

Une autre limitation apparaît dans le cas de la détection d'un rayonnement gamma pour mesurer la radioactivité d'un matériau particulier. En effect, le détecteur est souvent constitué d'un cristal de NaI dont la faible résolution en énergie peut dans certains cas provoquer un recouvrement partiel de la voie de signal et de la voie de référence, alors qu'elles sont théoriquement disjointes.

L'invention a pour but de remédier aux limitations du système décrit dans le document FR-A-2579767.

Ce but est atteint par l'utilisation d'un système comprenant une voie unique dans laquelle sont mesurés successivement le bruit de fond et le signal complet (signal pur et bruit de fond).

De manière précise, l'invention a pour objet un système de suppression du bruit et de ses variations pour la détection d'un signal pur dans un signal bruité discret mesuré comprenant en série un détecteur pour convertir un rayonnement reçu en impulsions électriques, un moyen de mise en forme, un convertisseur analogique-numérique, un moyen de traitement comprenant un processeur, au moins une mémoire et un circuit d'entrée-sortie.

Dans ce système, le processeur mesure un taux de comptage $N_2$ dans une fenêtre énergétique prédéterminée pendant une durée $\Delta T_s$ ; mesure un taux de comptage $N_3$ dans la même fenêtre énergétique pendant une autre durée $\Delta T_b$, égale à $q.\Delta T_s$, où $q$ est un nombre réel positif, pendant laquelle aucun événement du au signal pur attendu ne se produit ; compare l'information I, correspondant à la probabilité de fausse détection associée aux comptages $N_2$, $N_3$ et au coefficient $q$, à au moins un seuil $I_m$, chaque seuil $I_m$ correspondant à un taux de fausse détection prédéterminé ; et commande le moyen de signalisation en fonction de la valeur de l'information I par rapport aux seuils $I_m$.

Ce dispositif est utilisable efficacement lorsque les durées de comptage sont faibles devant la constante de temps de variation du bruit de fond en un lieu donné, ou si les comptages se font en des emplacements où le bruit de fond moyen est identique.

Le dispositif de l'invention est ainsi particulièrement bien adapté à la détection de rayonnements gamma ou neutroniques au moyen de détecteurs portatifs déplacés à pied, et à la détection de sources localisées.

La valeur du coefficient $q$ exprimant le rapport entre le durées $\Delta T_b$ et $\Delta T_s$ peut être choisie de manière quelconque. Cependant, une valeur non-entière entraîne une complication du traitement qui est en général inutile.

Dans le cas de la détection d'un rayonnement par comptages successifs de durées identiques $\Delta T_1$, ..., $\Delta T_i$, ..., on peut prendre le comptage fait pendant la durée $\Delta T_{i-1}$ comme comptage de bruit $N_3$ associé au comptage $N_2$ fait pendant la durée $\Delta T_i$. Dans ce cas, on a $q=1$. On peut également choisir comme comptage $N_3$ la somme de $q$ comptages précédant le comptage $N_2$ dont on veut savoir s'il contient un signal pur. Dans ce cas, $q$ est un entier quelconque ; en pratique, sa valeur est de quelques unités.

Il convient de noter que le procédé de l'invention consistant à prendre pour $N_3$ la somme des $q$ comptages précédant le comptage $N_2$ est totalement différent du procédé classique consistant à essayer d'estimer le bruit en prenant la valeur moyenne des $q$ comptages précédant le comptage $N_2$ que l'on teste. Dans le procédé classique, on se contente de comparer le comptage $N_2$ au bruit estimé, obtenu par une moyenne glissante sur $q$ valeurs, où $q$ est de l'ordre de quelques dizaines d'unités.

L'information I apportée par la mesur peut être exploitée de deux façons : elle peut être simplement comparée au seuil $I_m$ pour discriminer la présence ou l'absence d'un signal pur ; on peut aussi mesurer la différence $I-I_m$ pour évaluer le degré de certitude de la présence d'un signal pur.

La comparaison entre les informations I et $I_m$ peut être faite indirectement sur la probabilité de fausse détection et le taux de fausse détection associés à ces informations. L'information I est cependant utilisée de préférence pour l'exploitation, par exemple par visualisation d'un signal représentant l'information en fonction des comptages.

Selon l'invention, la détection d'un signal pur consiste à comparer l'information I apportée par les comptages $N_2$ et $N_3$ pour la valeur $q$ à au moins un seuil d'information $I_m$ prédéterminé. Chaque seuil est défini par un taux de fausse détection TF.

Selon une première variante préférée du système de l'invention, les comparaisons entre l'information I et chaque seuil $I_m$ sont remplacées par des comparaisons entre la probabilité de fausse détection PF, associée aux comptages $N_2$ et $N_3$ pour la valeur $q$, et les taux de fausse détection TF associés aux seuils $I_m$.

De préférence, l'information I est définie par la relation $I = -\log(PF/1-PF))$ ; on définit de la même manière $I_m$ par $I_m = -\log(TF/1-TF))$.

Selon une seconde variante préférée du système de l'invention, dans le cas où on connaît une relation entre le taux moyen de signal pur $M_1$, le taux moyen de bruit $M_2$ pendant les durées de comptage $\Delta T_s$, le taux moyen de bruit $M_3$ pendant les durées de comptage $\Delta T_b$, et le taux de fausse détection TF, on compare ledit taux moyen de signal pur $M_1$ au taux estimé par $N_2-N_3/q$.

Cette comparaison produit le même résultat que la comparaison directe entre la probabilité de fausse détection PF et le taux de fausse détection TF, mais présente souvent l'avantage d'être plus facile à effectuer en pratique.

Dans la variante qui vient d'être décrite, on suppose connue une relation du type $f(TF, M_1, M_2, M_3)=0$. Compte tenu de $q=M_3/M_2$, ceci revient à connaître une relation du type $g(TF, M_1, M_2,q)=0$. Pour les comptages mesurés $N_2$ et $N_3$, cette relation devient $g(PF, N_2-N_3/q, N_3/q, q)=0$.

L'utilisation pratique de la relation $g=0$ pour décider si un signal pur est présent peur conduire, dans certains cas, à des calculs longs et compliqués. La durée du calcul direct de la probabilité de fausse détection peut notamment être fonction de la valeur des comptages mesurés. La durée de ce calcul peut être en particulier incompatible avec une détection en temps réel, si la durée de chaque comptage est de une seconde par exemple.

Selon une caractéristique préférée du système de détection de l'invention, la fonction $g$ est tabulée. Ceci permet de calculer rapidement le taux moyen de signal pur $M_1$ pour le comparer à $N_2-N_3/q$, ou la probabilité de fausse détection PF pour la comparer au taux de fausse détection TF. La tabulation de la fonction $g$ présente l'avantage important que la durée du calcul du taux moyen de signal pur $M_1$, où de la probabilité de fausse détection PF, est pratiquement indépendante des valeurs de comptage $N_2$ et $N_3$ mesurées.

La fonction g peut être tabulée pour plusieurs valeurs différentes du taux de fausse détection TF. La comparaison de la valeur estimée du signal $N_2 - N_3/q$ aux valeurs de $M_1$ correspondant à chaque taux de fausse déection TF permet de mesurer l'information apportée par les comptages.

Dans le cas où la fonction g est tabulée pour une valeur unique du taux de fausse détection TF, la comparaison entre $N_2 - N_3/q$ et $M_1$ situe l'information I par rapport au seuil $I_m$, mais ne détermine pas la valeur de l'information I.

La mémorisation sous forme de tables de la fonction g est particulièrement facile dans le cas où des relations linéaires peuvent être mises en évidence entre les variables de ladite fonction g ou entre des fonctions simples desdites variables.

Les rayonnements corpusculaires, tels que les rayons neutroniques ou les rayons gamma, sont des rayonnements pour lesquels le nombre de particules détectées pendant un intervalle de temps $\Delta T$ est une variable aléatoire dont la densité de probabilité est celle de la loi de Poisson.

On constate que, dans ce cas, une relation sensiblement linéaire existe entre $\text{Log}(N_1)$ et $\text{Log}(N_2)$, où $N_1 = N_2 - N_3/q$, pour une valeur fixée de q et pour un taux de fausse détection TF fixé.

Une autre possibilité de tabulation de la fonction g, qui peut être mise en oeuvre même lorsqu'il n'existe pas de relation linéaire entre les variables de la fonction g consiste à créer, pour chaque valeur du taux de fausse détection TF, une table comprenant un ensemble de couples $(N_2, C(N_2))$, où $C(N_2)$ est l'entier le plus proche du taux moyen de bruit $M_2$ dans le comptage $N_2$ qui engendre une probabilité de fausse détection PF égale au taux de fausse détection TF.

Ainsi, pour chaque comptage $N_2$ mesuré, on compare la valeur $C(N_2)$ lue dans la table à l'estimation $N_3/q$ du taux moyen de bruit dans le comptage $N_2$ et on décide qu'un signal pur est présent, avec une probabilité de fausse détection inférieure à TF, si $C(N_2) \geqq N_3/q$.

Selon une variante, on peut choisir pour $C(N_2)$ le taux moyen de bruit $M_3$ égal à $q.M_2$. Pour chaque comptage, on compare alors $C(N_2)$ à $N_3$.

Les caractéristiques et avantages de l'invention ressortiront mieux de la description qui va suivre, donnée à titre illustratif mais non limitatif, en référence aux dessins annexés, sur lesquels :
- la figure 1 représente schématiquement le système de l'invention,
- la figure 2 représente graphiquement pour $q = 1$ la relation entre $\text{Log}(M_1)$ et $\text{Log}(M_2)$ pour différentes valeurs du taux de fausse détection TF, dans le cas où la densité de probabilité du nombre de particules détectées est celle de la loi de Poisson,
- la figure 3 illustre graphiquement la détermination de $\text{Log}(M_1)$ en fonction du comptage $N_2$, au moyen des relations linéaires mémorisées, et
- la figure 4 est un graphe illustrant, pour différentes valeurs du taux de fausse détection prédéterminé TF, la présence ou l'absence de signal pur dans le signal bruité mesuré en fonction du comptage $N_2$ et du comptage $N_3$.

L'invention s'applique à tous les rayonnements discrets, tels que les rayonnements corpusculaires, et concerne plus précisément l'analyse du signal délivré par un détecteur pour décider, avec une probabilité de fausse détection inférieure à un taux de fausse détection prédéterminé, si le signal analysé contient un signal pur dû à la présence d'une source particulière ou si ce signal se compose uniquement de bruit. A titre d'exemple, le procédé de l'invention s'applique notamment à la détection des rayons gamma et des rayons neutroniques.

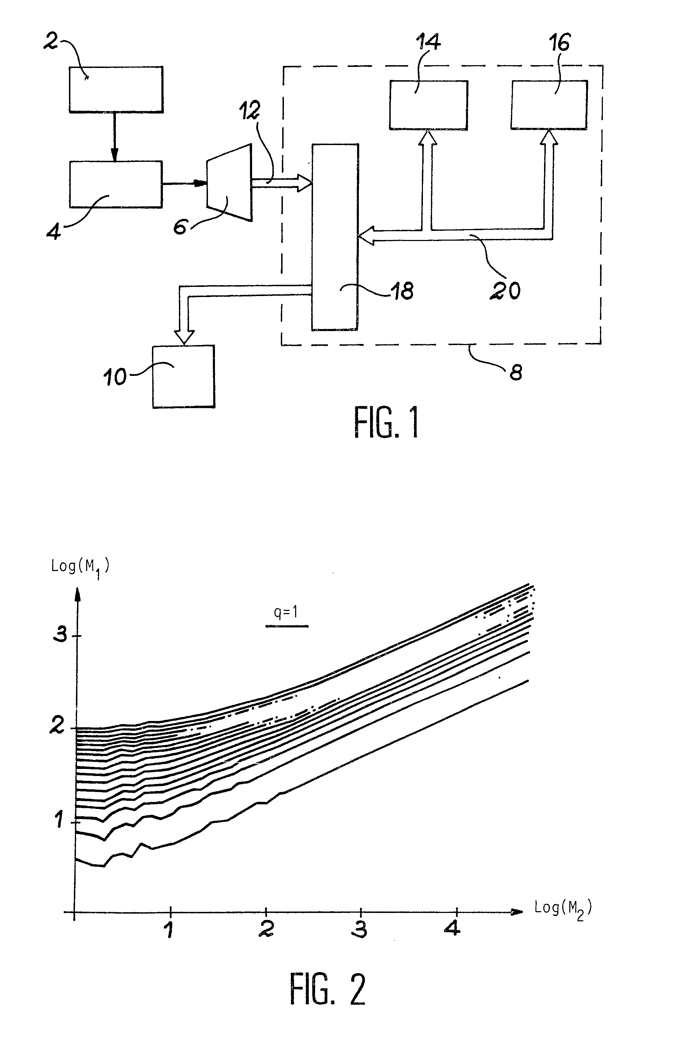

Le système représenté sur la figure 1 comprend un détecteur 2, un moyen de mise en forme 4, un convertisseur analogique numérique 6, un moyen de traitement 8 et un moyen de signalisation 10.

Le détecteur 2 dépend du rayonnement à détecter. Pour la détection de rayons gamma, ce détecteur peut être un germanium intrinsèque ou un scintillateur NaI associé à un photomultiplicateur ; pour la détection de neutrons, le détecteur est par exemple un compteur à He3.

Le détecteur 2 délivre une impulsion de tension pour chaque événement détecté. Cette impulsion est reçue par le moyen de mise en forme 4. Il peut comprendre notamment en série un amplificateur, un circuit de mise en forme et un discriminateur.

Le convertisseur analogique-numérique 6 est disposé en aval du moyen de mise en forme 4. Il convertit l'amplitude de l'impulsion reçue en un signal binaire, par exemple sur 8 bits dans le cas d'un scintillateur NaI ou 12 bits dans le cas d'un germanium intrinsèque. Ce signal binaire est transmis au moyen de traitement 8 par une voie 12.

Le moyen de traitement 8 comprend un processeur 14, au moins une mémoire 16 et un circuit d'entrée-sortie 18. Ces éléments sont reliés par une voie 20 comprenant des lignes d'adresse, des lignes de données et des lignes de commande.

Le moyen de signalisation 10 est commandé par le processeur 14 à travers le circuit d'entrée-sortie 18 et une voie 22. Il peut comprendre notamment des moyens d'alerte visuels et sonores. Ceux-ci sont déclenchés lorsqu'un signal pur est détecté, dans le cas où l'information I est comparée à un seuil unique $I_m$. Ils délivrent la valeur de l'information I si celle-ci est estimée par comparaison à plusieurs seuils différents.

Le fonctionnement du système est le suivant. Des comptages $N_2$ et $N_3$ sont effectués pendant des durées $\Delta T_s$ et $\Delta T_b$ indépendantes pour compter le nombre d'impulsions reçues par le détecteur dans une fenêtre énergétique prédéterminée correspondant à l'énergie du signal à détecter.

Le comptage $N_3$ est fait pendant une durée $\Delta T_b$ pendant laquelle on peut supposer qu'il n'y a pas de signal,

le comptage $N_3$ représente donc uniquement le bruit de fond dans la fenêtre énergétique prédéterminée.

Le comptage $N_3$, qui sert de référence, peut être effectué indifféremment avant ou après le comptage $N_2$.

Les durées $\Delta T_b$ et $\Delta T_s$ ne sont pas nécessairement égales. Il peut être avantageux, dans certains cas, de choisir un rapport $q = \Delta T_b / \Delta T_s$ différent de 1. Par exemple, lorsque le système est utilisé lors d'une expérience auprès d'un accélérateur de particules, il est important -compte tenu du coût de ce genre d'expériences- d'optimiser le rapport $q$ pour obtenir la quantité d'informations désirée en un temps minimal.

En revanche, dans le cas d'une détection séquentielle où les comptages ont lieu de manière répétitive pour des durées consécutives $\Delta T_1$, $\Delta T_2$, ..., $\Delta T_i$, ... aucun problème d'optimisation ne se pose plus. La solution la plus simple consiste alors à choisir pour le comptage $N_3$, associé à un comptage $N_2$ effectué pendant la durée $\Delta T_i$, la somme des $q$ comptages effectués pendant les durées $\Delta T_{i-q}$, $\Delta T_{i-q+1}$, ..., $\Delta T_{i-1}$. Le rapport $q$ est alors un nombre entier. Il est avantageux de choisir en pratique une valeur comprise entre 1 et 5.

Une variante possible, lorsque $q = 1$ consiste à prendre comme référence $N_3$ le comptage fait pendant la durée $\Delta T_{i-1}$ pour tous les comptages $N_2$ faits pendant les durées $\Delta T_i$, $\Delta T_{i+1}$, $\Delta T_{i+2}$, ... tant que l'infomration apportée par les comptages $N_2$ et le comptage $N_3$ est supérieure à un seuil prédéterminé, puis à reprendre l'avant-dernier comptage $N_2$ comme comptage de référence $N_3$ lorsque l'information devient inférieure au seuil prédéterminé.

Pour chaque couple de comptage ($N_2$, $N_3$), le système compare la probabilité de fausse détection PF associée à ces comptages à au moins un taux de fausse détection TF, ou une fonction de ladite probabilité de fausse détection à une fonction des taux de fausse détection prédéterminés, cette fonction pouvant être l'information I.

On va maintenant décrire, à titre d'exemple, le fonctionnement du système de l'invention pour la détection d'un rayonnement corpusculaire. La densité de probabilité du nombre de particules détectées est celle de la loi de Poisson.

La probabilité pour qu'un rayonnement existe, que le stockage $N_2$ contienne ou non un événement qui lui soit dû est, à $M_3$ constant :

$$P_1 = e^{-M_2} \cdot \sum_{J=0}^{J=N_2} \frac{M_2^J}{J!}$$

Par ailleurs, la probabilité pour que $M_3$ soit compris entre $M_3$ et $M_3 + dM_3$ est :

$$P_2 = \frac{e^{-M_3} \cdot \frac{(M_3)^{N_3}}{N_3!} \cdot dM_3}{\int_0^\infty e^{-M_3} \cdot \frac{(M_3)^{N_3}}{N_3!} \cdot dM_3}$$

La probabilité d'absence d'un rayonnement pur, ou probabilité de fausse détection, est alors:

$$PF = \int_{\{q \cdot N_2\}}^\infty P_1 \cdot P_2 ,$$

où $\{\}$ signifie "partie entière de", c'est-à-dire, en utilisant $qM_2 = M_3$,

$$PF = \sum_{J=N_2+1}^{\infty} \left( \frac{q^{N_3+1}}{(1+q)^{J+N_3+1}} \cdot \frac{(J+N_3)!}{J! \cdot N_3!} \cdot Y \right)$$

$$\text{avec } Y = e^{-(1+q) \cdot N_2} \cdot \sum_{K=0}^{K=J+N_3} \frac{((1+q) \cdot N_2)^K}{K!}$$

Le taux de fausse détection TF s'obtient en remplaçant dans l'expression de PF :

$$N_2 \text{ par } \{M_1\} + \{M_2\}$$
$$N_3 \text{ par } \{M_3\}$$

où {} sifnifie "partie entière de".

Compte tenu de $q = M_3/M_2$, cette relation est de la forme $g(TF, M_1, M_2, q) = 0$.

Ainsi qu'on l'a indiqué plus haut, lorsque le densité de probabilité du nombre d'événements détectés suit une loi de Poisson, on peut mettre en évidence des relations sensiblement linéaires entre des fonctions simples des variables TF, $M_1$, $M_2$ et q. Ceci permet de mémoriser sous forme de tables la fonction g et de déterminer pratiquement sans calcul le taux moyen de signal $M_1$ correspondant à un taux de fausse détection prédéterminé TF, pour un taux de bruit $M_2$ estimé et un rapport q fixé, et de comparer ledit taux moyen de signal $M_1$ au taux estimé égal à $N_2-N_3/q$.

La figure 2 est un graphe montrant la relation sensiblement linéaire entre $Log(M_1)$ et $Log(M_2)$, pour la valeur particulière $q = 1$. Ce graphe comprend un ensemble de droites correspondant chacune à une valeur de TF.

La mémorisation de toutes les droites n'est pas nécessaire. On pourra ne mémoriser que les droites correspondant, par exemple, à $TF = 10^{-3}$, $10^{-4}$, $10^{-5}$ et $10^{-6}$. Pour chacune des droites à mémoriser, deux couples de points au moins doivent être stockés. Ce nombre pourra être augmenté si l'on estime que la linéarité est insuffisante.

Pour la détection, conformément à l'invention, on construit une table comprenant $k_1.k_2$ couples de points $(Log(M_1), Log(M_2))$, où $k_1$ est le nombre de valeurs de TF mémorisées et $k_2$ le nombre de points par droite mémorisée.

La détection d'un signal pur est alors faite de la manière suivante. Des comptages $N_2$ et $N_3$ sont réalisés pendant des durée $\Delta T_s$ et $\Delta T_b$, où $\Delta T_b = q. \Delta T_s$, le comptage $N_3$ étant fait à un moment où on suppose qu'il n'y a pas de signal pur.

On estime ensuite le taux moyen de bruit $M_2$ pendant la durée $\Delta T_s$ par le rapport $N_3/q$, et on en déduit le taux moyen de signal pur $M_1$ pendant le durée $\Delta T_s$ au moyen de la table.

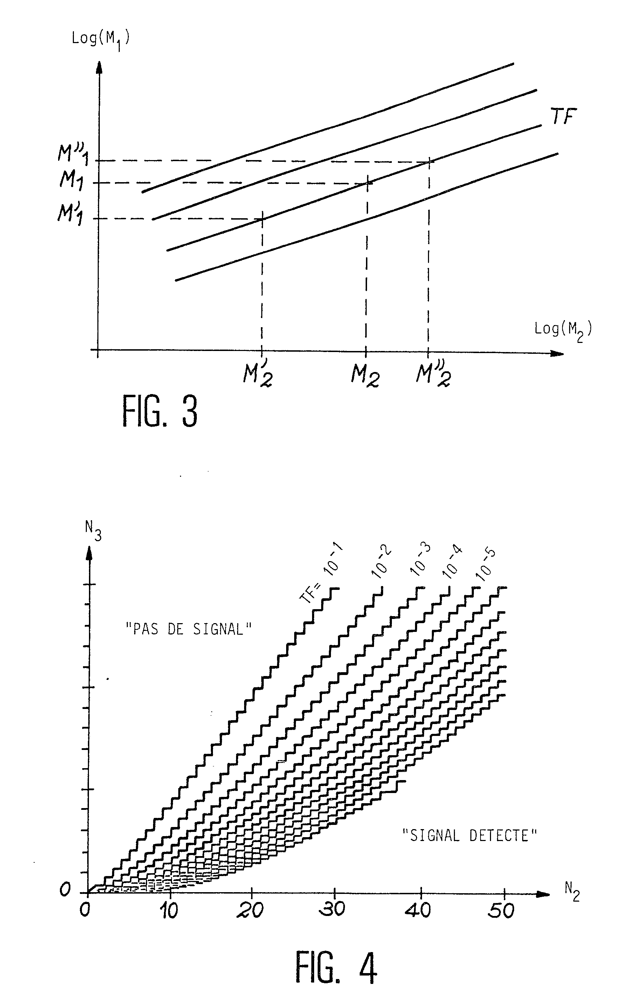

Pour la valeur TF choisie, le taux moyen de signal pur $M_1$ s'obtient comme on l'a représenté sur la figure 3, par interpolation des couples $(Log(M'1), Log(M'_2))$ et $(Log(M''_1, Log(M''_2))$, et en fonction du taux moyen de bruit $M_2$. L'interpolation peut être remplacée par une extrapolation si $Log(M_2)$ n'est pas compris entre $Log(M'_2)$ et $Log(M''_2)$.

Il ne reste alors plus qu'à comparer la valeur $M_1$ à son estimation égale à $N_2-N_3/q$. Si $M_1$ est supérieur à $N_2-N_3/q$, on considère que le comptage $N_2$ ne contient que des événements dus au bruit ; dans le cas contraire, on considère qu'un signal pur a été détecté.

La comparaison entre la valeur $M_1$ du taux moyen de signal donnée par la table et la valeur estimée $N_2-N_3/q$ est identique à la comparaison entre le taux de fausse détection TF et la probabilité de fausse détection PF, ou entre le seuil d'information $I_m$ et l'information I apportée par les comptages.

La comparaison entre la valeur estimée $N_2-N_3/q$ et une unique valeur de $M_1$, définie par un taux de fausse détection prédéterminé TF, réalise une détection par seuil : un signal pur est présent si le seuil est franchi, absence de signal pur si le seuil n'est pas franchi.

Comme on l'a déjà indiqué, l'information peut être évaluée de manière plus quantitative. Cette évaluation de l'information utilise la suite des opérations qui viennent d'être décrites, celles-ci étant répétées pour plusieurs

EP 0 309 320 A1

valeurs de TF, par exemple $10^{-3}$, $10^{-4}$, $10^{-5}$, $10^{-6}$. Le système détermine ainsi plusieurs valeurs du taux moyen de signal $M_1$, chacune associée à un taux de fausse détection, donc à un niveau d'information.

L'information I apportée par les comptages est comprise entre les informations I' et I'' correspondant aux taux moyens de bruit $M'_1$ et $M''_1$ définis par $M'_1 \geqq N_2$ et $(N_3/q) \leqq M''_1$.

L'information est définie conformément à l'invention par la relation $I = -Log(PF/(1-PF))$. La probabilité de fausse détection étant en général inférieure à $10^{-3}$, cette relation se traduit en pratique par $I = -LogPF$.

L'information I a donc une valeur usuelle que quelques unités, pour une base de logarithme égale à 10. La représentation graphique de l'information I en fonction du numéro du comptage, c'est-à-dire finalement en fonction du temps, constitue alors pour un opérateur une visualisation particulièrement claire et représentative.

Le procédé de détection décrit en référence aux figures 2 et 3 ne peut être mis en oeuvre que si des relations linéaires existent entre des fonctions simples des variables $TF, M_1, M_2$ et q.

Dans le cas contraire, le détection peut être faire de la manière suivante.

Dans une première étape, on crée pour chaque taux de fausse détection TF choisi une table constituée d'un ensemble de couples $(N_2, C(N_2))$, où $C(N_2)$ est l'entier le plus proche du taux de bruit moyen $M_2$ du comptage $N_2$ pour lequel la probabilité de fausse détection PF est égale au taux de fausse détection TF.

Ensuite, pour chaque couple de comptage $(N_2, N_3)$ mesuré, on estime le taux moyen de bruit $M_2$ par la valeur $N_3/q$ et on compare cette estimation à la valeur $C(N_2)$ lue dans la table correspondant à TF. Si $C(N_2)$ est supérieur à $N_3/q$, un signal pur est présent dans le comptage $N_2$ ; si $C(N_2)$ est inférieur à $N_3/q$, le comptage $N_2$ ne contient que du bruit. Suivant une variante, on prend pour $C(N_2)$ la valeur q $M_2$, c'est-à-dire $M_3$, au lieu de $M_2$. On compare alors $C(N_2)$ à $N_3$, au lieu de $N_3/q$.

On a représenté sur la figure 4, un graphique illustrant les tables construites pour différentes valeurs de TF. La détection selon l'invention consiste à comparer la position du point de coordonnée $(N_2, N_3)$ à la courbe du taux de fausse détection prédéterminé TF choisi. Si le point est au-dessus de la courbe, le comptage $N_2$ ne contient que du bruit ; dans le cas contraire, le comptage $N_2$ contient un signal pur.

Comme dans le procédé décrit en référence aux figures 2 et 3, le procédé décrit en référence à la figure 4 permet d'évaluer quantitativement l'information I lorsque plusieurs tables, associées chacune à une valeur particulière de TF, sont utilisées.

## Revendications

1. Système de suppression du bruit et de ses variations pour la détection d'un signal pur dans un signal bruité discret mesuré comprenant en série un détecteur (2) pour convertir le signal reçu en impulsions électriques, un moyen de mise en forme (4) desdites impulsions électriques, un convertisseur analogique-numérique, un moyen de traitement (8) et un moyen de signalisation (10), ledit moyen de traitement comprenant un processeur (14), au moins une mémoire (16) et un circuit d'entrée-sortie (18), ledit système étant caractérisé en ce que ledit processeur :
- mesure un taux de comptage $N_2$ dans une fenêtre énergétique prédéterminée pendant une durée $\Delta T_s$,
- mesure un taux de comptage $N_3$ dans ladite fenêtre énergétique prédéterminée pendant une autre durée $\Delta T_b$, égale à q. $\Delta T_s$ où q est un nombre réel positif, pendant laquelle aucun événement correspondant au signal pur attendu n'est présent,
- compare l'information I, correspondant à la probabilité de fausse détection (PF) associée aux comptages $N_2$, $N_3$ et au coefficient q, à au moins un seuil $I_m$, chaque seuil $I_m$ correspondant à un taux de fausse détection prédéterminée,
- commande le moyen de signalisation en fonction de la valeur de l'information I par rapport aux seuils $I_m$ ; et en ce que des comptages sont effectués séquentiellement et de manière continue pendant des durées successives égales $\Delta T_1$, $\Delta T_2$, ... $\Delta T_i$, ..., et dans lequel le comptage $N_3$, associé à un comptage $N_2$ effectué pendant la durée $\Delta T_i$, est pris égal à la somme des q comptages effectués pendant les durées $\Delta T_{i-q}$, $\Delta T_{i-q+1}$, ..., $\Delta T_{i-1}$.

2. Système selon la revendication 1, caractérisé en ce que les comptages sont effectués séquentiellement et de manière continue pendant des durées successives égales et en ce qu'un même comptage de référence $N_3$ effectué pendant la durée $T^{i-1}$, est utilisé pour les comptages $N_2$ effectués pendant les durées $T_i$, $\Delta T_{i+1}$, ..., tant que les couples $(N_2, N_3)$ où $N_3$ est fixé, apportent une information I supérieure à un seuil prédéterminé $I_m$.

3. Système selon la revendication 1 ou 2, caractérisé en ce que le processeur compare l'information I à un seuil unique $I_m$, un signal pur étant détecté si le seuil est franchi.

4. Système selon la revendication 1 ou 2, caractérisé en ce que le processeur estime l'information I par comparaison à une pluralité de seuils $I_m$.

5. Système selon l'une quelconque des revendications 3 et 4, caractérisé en ce que le processeur compare la probabilité de fausse détection PF, associée à l'information I, au taux de fausse détection TF, associé à chaque seuil $I_m$, l'information I étant définie par $I = -Log(PF/(1-PF))$ et chaque seuil $I_m$ par $I_m = -Log(TF/(1-TF))$.

7

6. Système selon l'une quelconque des revendication 3 à 5 dans lequel on connaît une relation $g(TF, M_1, M_2, q) = 0$, où $M_1$ est le taux moyen de signal pur et $M_2$ le taux moyen de bruit, caractérisé en ce que la détection est opérée de manière indirecte sur le taux moyen de signal pur, le processeur comparant, pour au moins une valeur du taux de fausse détection TF, la valeur $M_1$ au taux moyen de signal pur estimé $N_2-N_3/q$, où $N_3/q$ est une estimation de $M_2$.

7. Système selon la revendication 6, caractérisé en ce que la relation $g(TF, M_1, M_2, q) = 0$ est stockée sous forme de table dans la mémoire (16).

8. Système selon la revendication 7, pour la détection d'un signal pour lequel $Log(M_1)$ est une fonction sensiblement linéaire de $Log(M_2)$, caractérisé en ce que le processeur :
- crée, préalablement à toute mesure, une table comprenant, pour chaque valeur de TF prise parmi un ensemble de valeurs prédéterminées, au moins deux couples $(LogM_1, LogM_2)$,
- calcule, après chaque mesure et pour au moins une valeur de TF, $Log(M_1)$ associé à l'estimation $LogN_3/q$ de $Log(M_2)$, par interpolation ou extrapolation des valeurs contenues dans la table,
- compare le taux moyen de signal brut estimé $N_2-N_3/q$ à au moins un taux moyen de signal pur $M_1$ calculé.

9. Système selon la revendication 7, caractérisé en ce que le processeur :
- crée, préalablement à toute mesure, pour chaque valeur de TF pris parmi un ensemble de valeurs prédéterminées, une table comprenant une suite de couples $(N_2, C(N_2))$, où $C(N_2)$ est l'entier le plus proche du taux moyen de bruit $M_2$ pendant la durée $\Delta T_s$ du comptage $N_2$ qui engendre une probabilité de fausse détection PF égale au taux de fausse détection TF, ladite table étant stockée dans la mémoire, et
- compare après chaque mesure la valeur $C(N_2)$ de la table associée au comptage $N_2$, au comptage $N_3/q$, un signal pur étant détecté si $C(N_2)$ est supérieur à $N_3/q$.

10. Système selon la revendication 7, caractérisé en ce que le processeur :
- crée, préalablement à toute mesure, pour chaque valeur de TF prise parmi un ensemble de valeurs prédéterminées, une table comprenant une suite de couples $(N_2, C(N_2))$, où $C(N_2)$ est l'entier le plus proche du taux moyen de bruit $M_3$ pendant la durée $\Delta T_b$ du comptage $N_3$ qui engendre une probabilité de fausse détection PF égale au taux de fausse détection TF, ladite table étant stockée dans la mémoire, et
- compare après chaque mesure la valeur $C(N_2)$ de la table, associée au comptage $N_2$, au comptage $N_3$, un signal pur étant détecté si $C(N_2)$ est supérieur à $N_3$.

11. Système selon l'une quelconque des revendications 8 à 10, caractérisé en ce que la mémoire contient des tables pour plusieurs valeurs de TF, le processeur calculant le taux moyen de signal pur $M_1$ pour plusieurs valeurs de TF et évaluant la probabilité de fausse détection associée aux comptages $N_2$ et $N_3$ en l'encadrant par les deux valeurs de TF correspondant aux deux valeurs de $M_1$ encadrant l'estimation $N_2-N_3/q$.

FIG. 1

FIG. 2

Log(M$_1$)

TF

M$''_1$

M$_1$

M$'_1$

Log(M$_2$)

M$'_2$    M$_2$    M$''_2$

FIG. 3

N$_3$

TF= 10$^{-1}$    10$^{-2}$    10$^{-3}$    10$^{-4}$    10$^{-5}$

"PAS DE SIGNAL"

"SIGNAL DETECTE"

O

0    10    20    30    40    50    N$_2$

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 202 980 (COMMISSARIAT A L'ENERGIE ATOMIQUE) * Résumé; colonne 3, lignes 33-55; colonne 4, ligne 49 - colonne 9, ligne 50; figures * --- | 1 | G 01 T 1/16 |
| D,A | EP-A-0 200 596 (COMMISSARIAT A L'ENERGIE ATOMIQUE) * Résumé; colonne 3, ligne 1 - colonne 6, ligne 10, ligne 44 - colonne 12, ligne 7; figures * --- | 1,3-8, 11 | |
| A | NUCLEAR INSTRUMENTS AND METHODS IN PHYSICS RESEARCH, section A, vol. A248, nos. 2,3, 1 août 1986, pages 471-482, Elsevier Science Publishers B.V. (North-Holland Physics Publishing Division), Amsterdam, NL; M.L. RAMBAUT: "Détection d'un rayonnement corpusculaire et information" * En entier * --- | 1,3-8, 11 | |
| A | NUCLEONICS, vol. 24, no. 8, août 1966, pages 118-121, New York, US; W.L. NICHOLSON: "Statistics of net-counting-rate estimation with dominant background corrections" * Pages 119-121 * ----- | 1 | DOMAINES TECHNIQUES RECHERCHES (Int. Cl.4) G 01 T |

Le présent rapport a été établi pour toutes les revendications

| Lieu de la recherche | Date d'achèvement de la recherche | Examinateur |
|---|---|---|
| LA HAYE | 09-01-1989 | DATTA S. |